# EUROPEAN PATENT SPECIFICATION

(11) **EP 2 291 987 B1**
(45) Date of publication and mention of the grant of the patent: **15.08.2012**
(21) Application number: 08805138.8
(22) Date of filing: 08.10.2008
(51) Int. Cl.: G10L 15/26

(54) **METHOD AND DEVICE FOR LAUNCHING AN APPLICATION UPON SPEECH RECOGNITION DURING A COMMUNICATION**
VERFAHREN UND EINRICHTUNG ZUM STARTEN EINER ANWENDUNG BEI SPRACHERKENNUNG WÄHREND EINER KOMMUNIKATION
PROCÉDÉ ET DISPOSITIF POUR LANCER UNE APPLICATION SUITE À UNE RECONNAISSANCE VOCALE DURANT UNE COMMUNICATION

(30) Priority: 27.05.2008 US 127066
(43) Date of publication of application: 09.03.2011
(73) Proprietor: Sony Ericsson Mobile Communications AB, 221 88 Lund (SE)
(72) Inventor: KUMARI, Tripta, Cheshire WA14 2EL (GB)
(74) Representative: Aurell, Henrik
(86) International application number: PCT/EP2008/063449
(87) International publication number: WO 2009/143904

(56) References cited:
- EP-A- 1 841 242
- WO-A-2007/054760
- WO-A-2007/121792
- DE-A1- 10 036 673
- US-A1- 2004 054 539
- US-A1- 2007 133 875
- US-A1- 2008 075 237

## Description

### TECHNICAL FIELD

The present invention relates to the field of mobile communication devices and, in particularly, to automatically launching applications in mobile communication devices.

### BACKGROUND

Modern-day handheld communication devices, such as mobile phones, are capable of performing a multitude of tasks ranging from voice communication to sending e-mails, editing and sharing documents, browsing the Internet, play music and movie files, etc. However, due to the form factor of modern mobile communication device many of these tasks are difficult to perform in parallel, although possible, and/or requiring several cumbersome operations by the user to be initiated, thus resulting in unnecessary waiting time. For instance, if a user is engaged in voice communication and wants to share data with the other party, the user often have to interrupt the conversation and take time to look at the mobile communication device's screen and operate the input means on the device, to be able to share the information. The same problem arises for example if the user is engaged in chatting on a forum and wants to share information with one or more participants. The tedious navigation and operation of the mobile communication device may result in that the persons participating in the chat will be kept waiting for some time. Also, any operation of the mobile communication device may result in that the connection, voice or data, may be interrupted or lost. Therefore, finding a way to reduce the number of user operations need to simultaneously performing several tasks, such as conducting a voice call and at the same time sending contact information to the same or another party, is very welcome.

Some solutions offered by prior art are as follows.

WO2007/121792 A discloses a system and method for analyzing a voice conversation with respect to keywords by means of speech recognition. Once one or more keywords have been identified, the system uses them to retrieve information on the keyword and present it on the display of at least one of the terminals engaged in the voice communication.

US2008/075237 A1 relates to a system and method to launch a search query in a telephonic device which is based on words recognized from a telephone conversation made by using the telephonic device. Once the word has been recognized and the query using the word has yielded a result, the device is able to create a hyperlink on the result found.

US2004/054539 A1 is about a system for voice controlled application where a voice command defining an execution state of an application program is analyzed by a speech recognition server and, after being recognized, is used to put the application program in a different execution state on a different graphical display.

EP 1 841 242 A teaches an apparatus and method for registering a telephone number received by a mobile terminal as the latest number and making a new call connection possible to the latest number during or after a phone call is made.

DE 100 36 673 shows how to set speech loudness level in cellular telephone by reducing or increasing loudness level in response to speech commands.

In US2007/133875 A1 words during a communication event, such as a telephone call, an email message, MMS, SMS or the like are identified using speech recognition and in the case one of the words identified a picture is displayed having a key picture word matching the one of the words identified in the conversation.

WO 2007/054760 A discloses a method to recognize text from a voice conversation by using speech recognition in order to save the text in a memory of a communication device used for the voice conversation. This way, telephone numbers, or the like, uttered during such a voice conversation, are saved in the memory of the device.

### SUMMARY OF THE INVENTION

With the above and following description in mind, then, an aspect of the present invention is to provide an alternative method for operating applications in, which seeks to mitigate, alleviate, or eliminate one or more of the above-identified deficiencies in the art and disadvantages singly or in any combination.

The invention is directed to the method of claim 1 and the device of claim 10. Advantageous embodiments are claimed in the dependent claims.

An first aspect of the present invention relates to a method for launching at least one application in a communication device, comprising the steps of detecting, in said communication device, one or more terms during communication between at least two parts, wherein at least one of said parts is a person, comparing said terms with stored terms in a database, identifying one or more key terms depending on said comparison, determining a launch criteria based on said identified key terms, and launching at least one application, based on said launch criteria, in said communication device.

Launching may be interpreted as starting an application, executing a command such as open a folder or sorting a list of objects, activating a function, changing a setting, or a combination of these.

The method may also comprise that said launch criteria is further based on user information.

The method may also comprise that said method further comprise the step of storing statistical data over the occurrence of said identified key terms during said communication, wherein the step of determining a launch criteria is further based on said statistical data.

The method may also comprise that said method further comprise the step of determining a termination criteria based on said identified key terms, and terminating at least one application, based on said termination criteria, in said communication device.

The method may also comprise that said termination criteria is further based on said user information.

The method may also comprise that said launch criteria is based on first said identified key term during said communication.

The method may also comprise that said launch criteria is continuously updated during said communication.

The method may also comprise that said launching, based on said launch criteria, is executed continuously during said communication.

The method may also comprise that said launching, based on said launch criteria, is executed after said communication is ended.

The method may also comprise that said detection is ended when an application is launched.

The method may also comprise that a running application is terminated when a further application is launched.

An second aspect of the present invention relates to a communication device adopted for launching at least one application in said communication device, comprising, detecting means for detecting, in said communication device, one or more terms during communication between at least two parts wherein at least one of said parts is a person, comparing means for comparing said terms with stored terms in a database, identifying means for identifying one or more key terms depending on said comparison, determining means for determining a launch criteria based on said identified key terms, and launching means for launching at least one application, based on said launch criteria, in said communication device.

The communication device may further comprise providing means for providing user information.

The communication device may further comprise storing means for storing statistical data over the occurrence of said identified key terms during said communication.

The communication device may further comprise determining means for determining a termination criteria based on said identified key terms, and termination means for terminating at least one application, based on said termination criteria, in said communication device.

The communication device may further comprise updating means for continuous updating of the launch criteria during said communication.

The communication device may further comprise execution means for continuous executing of said launching means, based on said launch criteria, during said communication.

An third aspect of the present invention relates to a system adopted for launching at least one application in a communication device, comprising, detecting unit for detecting, in said communication device, one or more terms during communication between at least two parts wherein at least one of said parts is a person, comparing unit for comparing said terms with stored terms in a database, identifying unit for identifying one or more key terms depending on said comparison, determining unit for determining a launch criteria based on said identified key terms, and launching unit for launching at least one application, based on said launch criteria, in said communication device.

The system may further comprise a providing unit for providing user information.

The system may further comprise a storing unit for storing statistical data over the occurrence of said identified key terms during said communication.

The system may further comprise a determining unit for determining a termination criteria based on said identified key terms, and a termination unit for terminating at least one application, based on said termination criteria, in said communication device.

The system may further comprise an updating unit for continuous updating of the launch criteria during said communication.

The system may further comprise an execution unit for continuous executing of said launching means, based on said launch criteria, during said communication.

Any of the features in the first, second, or third aspect of the present invention above may be combined in any way possible.

### BRIEF DESCRIPTION OF THE DRAWINGS

Further objects, features, and advantages of the present invention will appear from the following detailed description of some embodiments of the invention, wherein some embodiments of the invention will be described in more detail with reference to the accompanying drawings, in which:
Fig. 1 shows a mobile communication device, in this case a mobile phone, according to an embodiment of the present invention; and
Fig. 2 shows a typical display view of a mobile communication device, according to an embodiment of the present invention; and
Fig. 3 shows an automatic launch procedure according to the present invention; and
Fig. 4 shows another automatic launch procedure according to the present invention; and
Fig. 5 shows yet another automatic launch procedure according to the present invention; and
Fig. 6 shows yet another automatic launch procedure according to the present invention; and
Fig. 7 shows yet another automatic launch procedure according to the present invention; and
Fig. 8 shows an example of a display view according an embodiment of the present invention; and
Fig. 9 shows another example of a display view according an embodiment of the present invention; and
Fig. 10 shows yet another example of a display view according an embodiment of the present invention; and
Fig. 11 shows yet another example of a display view according an embodiment of the present invention.

### DETAILED DESCRIPTION

Embodiments of the present invention relate, in general, to the field of automatically launching applications in mobile communication devices. A preferred embodiment relates to a portable communication device, such as a mobile phone, including one or more marker input devices. However, it should be appreciated that the invention is as such equally applicable to electronic devices which do not include any radio communication capabilities. However, for the sake of clarity and simplicity, most embodiments outlined in this specification are related to mobile phones.

Embodiments of the present invention will be described more fully hereinafter with reference to the accompanying drawings, in which embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference signs refer to like elements throughout.

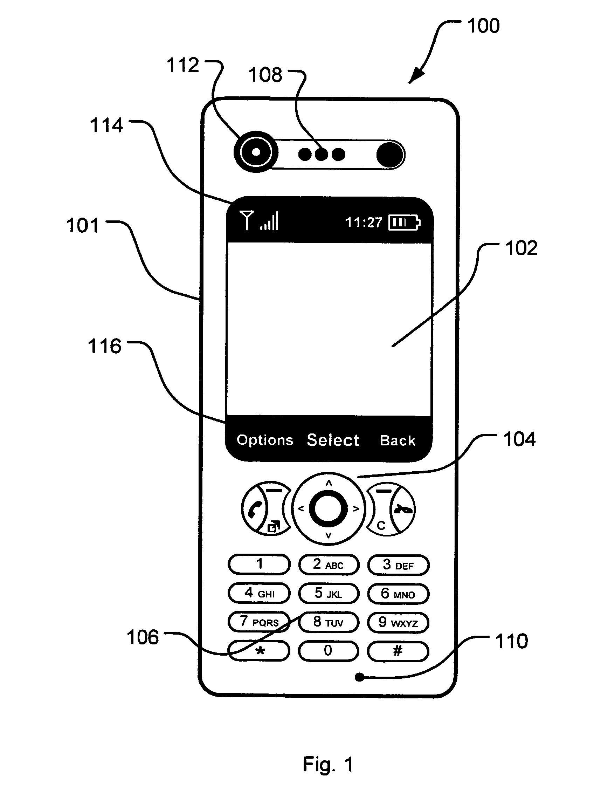

Figure 1 show a mobile communication device 100 comprising a casing 101, a display area 102 and means 104 for navigating among items (not shown) displayed in the display area. The display area 102 may comprise a status indication area 114 and one or more softkey bars 116. The status indication area 114 may for example include symbols for indicating battery status, reception quality, speaker on/off, present mode, time and date, etc. The status indication section is not in any way limited to include the symbols and the functions presented herein. The softkey bar 116 is operable using the navigation means 104 or, if using a touch sensitive screen, by tapping the softkey directly with a pen-like object, a finger, or other body part. The functions of the softkeys are not limited by the functions indicated in the figure. Neither are the placements of the softkey bar 116 and the status indication area 114 limited to be placed at the bottom and the top of the screen, as shown in the example. The navigation means 104 can be a set of buttons, a rotating input, a joystick, a touch pad, a multidirectional button, but can also be implemented using a touch sensitive display, wherein the displayed items directly can be tapped by a user for selection, or be voice activated via a headset or a built-in microphone. The mobile communication device 100 can also comprise other elements normally present in such a device, such as a keypad 106, a speaker 108, a microphone 110, a camera 112, a processor (not shown), a memory (not shown), one or more accelerometers (not shown), a vibration device (not shown), an AM/FM radio transmitter and receiver (not shown), a digital audio broadcast transmitter and receiver (not shown), etc. Several types of accessories may be connected to the mobile communication device 100.

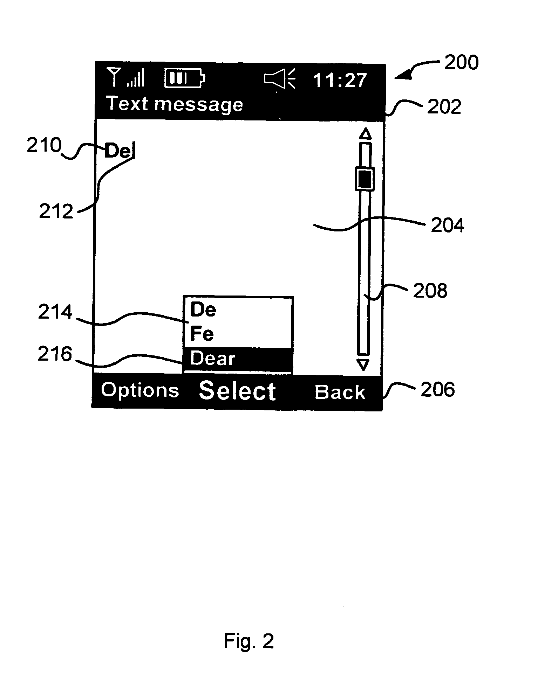

Figure 2 illustrates an example of a common display view in a mobile communication device 200, comprising a general status indication section 202, a softkey bar 206 and a general display area 204. The general status indication section 202 may for instance include symbols for battery status, reception quality, speaker on/off, present mode, clock time, etc. The status indication section is not in any way limited to only include these symbols. Thus, other symbols in any shape, form or colour can occur. The softkey bar 206, situated at the bottom of the display view, is operable using the navigation means 104 mentioned in conjunction with Fig. 1. The functions of these softkeys are not limited by the functions indicated in the figure. The preferred function of the general display area 204, residing between the status indication section 202 at the top and the softkey bar 206 at the bottom, is to display information from running applications in the handheld communication apparatus. In our case the display area 204 also comprise a scroll bar 208, a pop-up menu 214, inputted characters 210, and a cursor 212 showing where next character, word, phrase, abbreviation, etc. may be inputted.

One way of solving, or at least mitigate, the problems discussed in the background section is to monitor the communication (voice, data, or other) between the involved users, and automatically detect key terms which may be used to predict which application(s), manoeuvre(s), and/or operation(s) one or all of the user may want to access or use in the near future, and to automatically launch these predicted application(s), manoeuvre(s), and/or operation(s). For example, if two users are engaged in voice communication and one of the users says to the other user that he/she will 'remember' something, the mobile phone will detect the remember key term and automatically launch a notepad application ready to be used when the user disengage the voice communication. In this way valuable time and effort is saved.

In the following embodiments, describing the present invention, an example is used wherein two users (two persons) are engaged in a voice communication with each other via mobile phones. However, the present invention is in no way limited to this example only. In fact, the communication may also be between a user and an automated service (computer), between a user and several other users, or between groups of users and automated services. Also, one situation may be that two person are engaged in a communication face-to-face and the mobile phone, laying on the table between the users, picks up and analysis the conversation via its microphone.

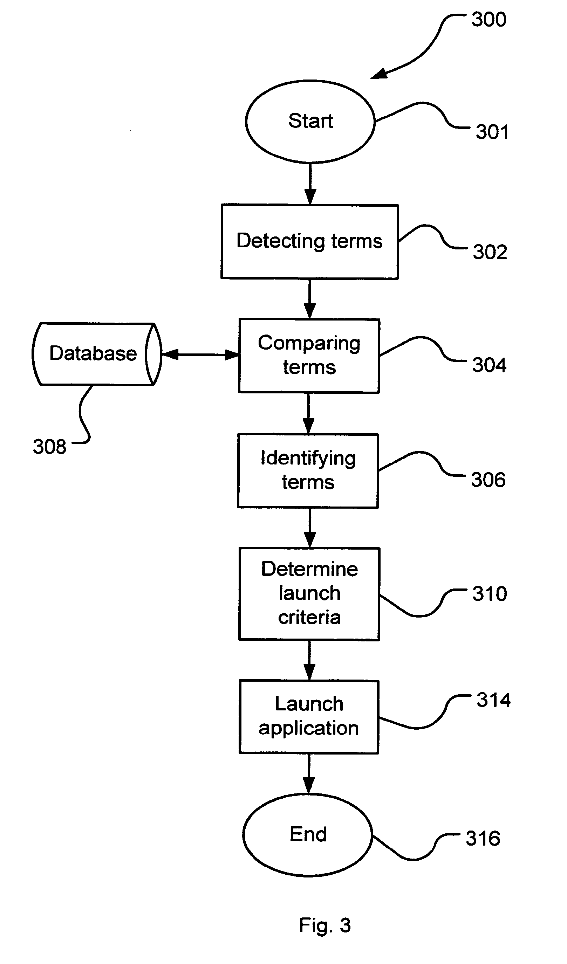

Figure 3 describes a procedure 300 for automatically launching of an application during communication between at least two parts, wherein at least one of the parts is a person (user), according to an embodiment of the invention. The automatic launching procedure 300 starts 301 when the parts, in this case both users, are connected to each other and are able to communicate with each other.

In 302 terms, such as words, expressions, or sentences, in the voice (speech) conversation between the users are detected. However, in one embodiment only terms originating from one of the user may be detected.

The detected terms are then compared 304 with stored terms in a database 308. The database may contain user-set terms, which for example may have been manually entered by the user, installed terms, which may have come with a certain application or been downloaded from an external database, or factory-preset terms, which are pre-installed from the factory when you buy the mobile phone.

In 306, key terms from the comparison are identified. This may for instance be verbs like 'send', 'share', etc. or words related to a specific usage area, such as 'picture' which is related to photographing and stored photos in the photo album in the mobile phone.

The identified terms in 306 makes out the basis for the determination of a launch criteria 310. If for example the key term 'send' is detected the launch criteria may be to immediately launch the mail application in the mobile phone.

Depending on determined launch criteria 310, an appropriate application is launched 314. In this case, if the launch criteria is set to 'immediately launch the mail application', the mail application is launched 314. However, in another embodiment the launch criteria may be set to launch one or more specific applications at a given time or after a specific event in the mobile phone has occurred.

When an application has been launched the automatic launch procedure is ended 316. The phrase 'launch application' 314 may in this invention and throughout the application be interpreted as one of or a series of the following; launching an application, execution an command, changing a setting in the mobile communication device. In one embodiment the application is launched in the mobile phone belonging to the user that has communicated the detected key terms, and in another embodiment the application may be launched in all users' mobile phones, or only in the other users' mobile phones that didn't communicated the detected key terms.

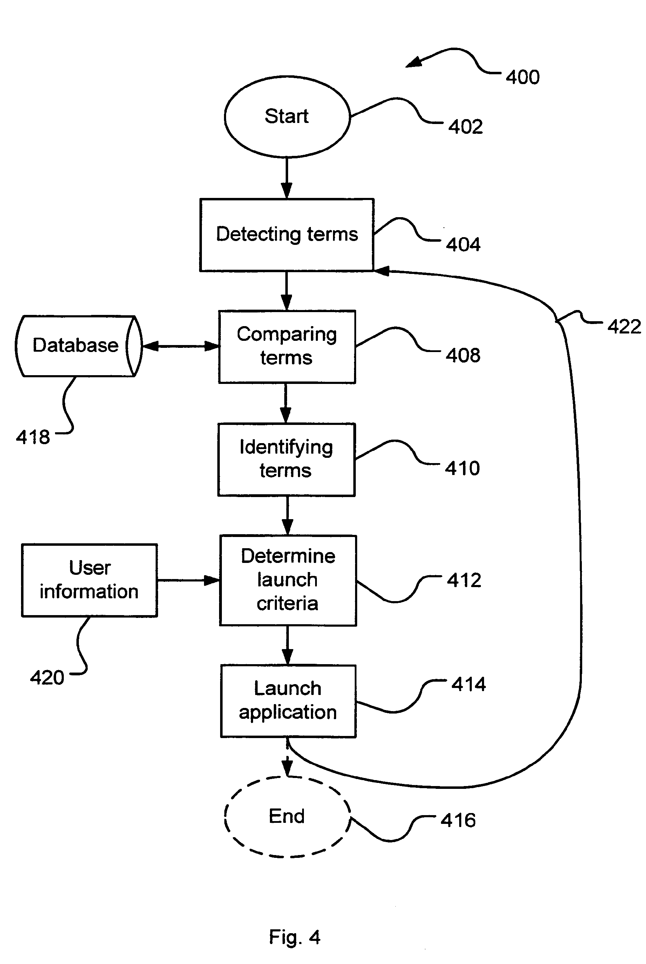

Figure 4 describes another procedure for automatically launching an application 400, according to an embodiment of the invention. The automatic launching procedure 400 starts in the same manner by detecting terms 404, comparing the detected terms 408 to terms stored in a database 418, and identifying key terms 410. The launch criteria is, in this embodiment, not only decided on the basis of the identified key terms but also based on inputted or stored user information 420. For instance, if the key term 'picture' is identified the user may be prompted, on the mobile phones display screen, with a question if the user wants to open the picture folder. The answer to the prompted question together with the identified key terms will then be the basis for determining the launch criteria. If for instance the user answers 'yes', a launch criteria which opens the picture folder is going to be generated, and executed in the step 414 launch application. After the launching of the application in 414 the analysis of the speech may continuo 422 in the same manner as describes above. In this way, during the conversation several relevant applications may be launched. Optionally, hence the jagged lines, the user may set the automatic launching procedure to end 416 after a first or a predetermined number of application have been launched.

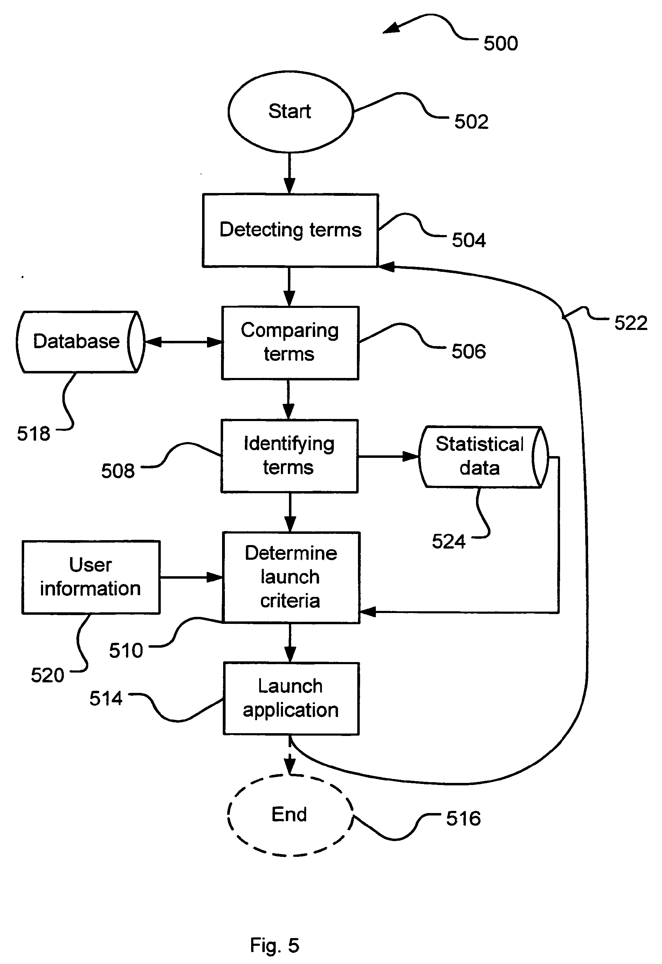

Figure 5 describes another procedure for automatically launching an application 500, according to an embodiment of the invention. The automatic launching procedure 500 starts in the same manner as previous embodiments by detecting terms 504, and comparing the detected terms 506 to terms stored in a database 518. However, in this embodiment statistical data 524, such as the occurrence frequency of the identified terms are stored. The type of statistical data that should be stored and used may be user-set, application set, or factory pre-set. The statistical data is then used as a basis, together with identified terms 508 and user information 520, for determine a launch criteria 510. For example, the term 'picture' is used five times during a conversation and the term 'send' is used three times during the conversation. The number of times each terms are used is stored as statistical data 524. Since the term 'picture' has been used more times during the conversation it may be more likely that one or both users wants to access the picture folder than sending an e-mail. In this way, when determining the launch criteria 510, the number of times the terms has been identified is taken into account. When the launch criteria 510 has been determined, based on identified terms, statistical information about the identified terms, and user information, an appropriate application is launched 514. After the launch of the application in 514 the analysis of the communication may continuo 522 in the same manner as describes above. Optionally, hence the jagged lines, the user may set the automatic launching procedure to end 516 after a first or a preset number of application have been launched.

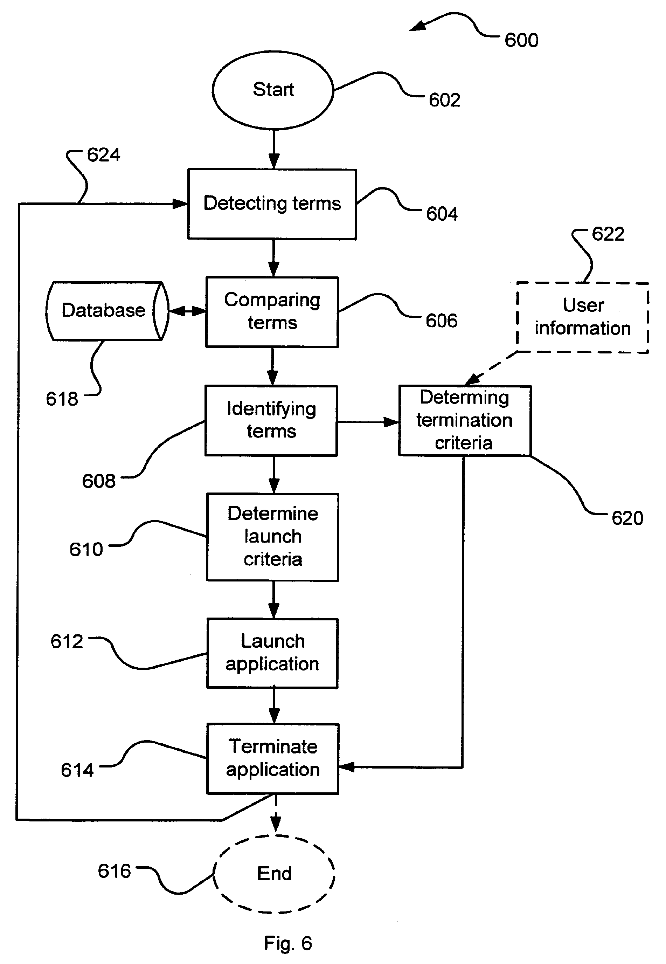

Figure 6 describes another procedure for automatically launching an application 600, according to an embodiment of the invention. The automatic launching procedure 600 starts in the same manner as in previous embodiments by detecting terms 604, and comparing the detected terms 606 to terms stored in a database 618, identifying key terms 608, determining a launch criteria 612, and launching an application 612 based on the launch criteria. In this embodiment a termination criteria 620 is determine on the basis of the identified terms. The termination criteria is then used as a basis for determining if a launched application is going to be terminated 614 or not. For instance, if a mail application has previously been launched and the term 'picture' is identified, the picture folder may be launched instead and the mail application terminated. Optionally, hence the jagged lines, user information 622 may also be a factor that may be considered in the process of determining the termination criteria. For instance, the user may in the example above be prompted to decided if the current application running should be terminated or not. After the termination of the application, or not, in 614 the analysis of the speech may continuo 624, in the same manner as describes above. Optionally, hence the jagged lines, the user may set the automatic launching procedure to end 616 after a first or a predetermined number of application have been launched.

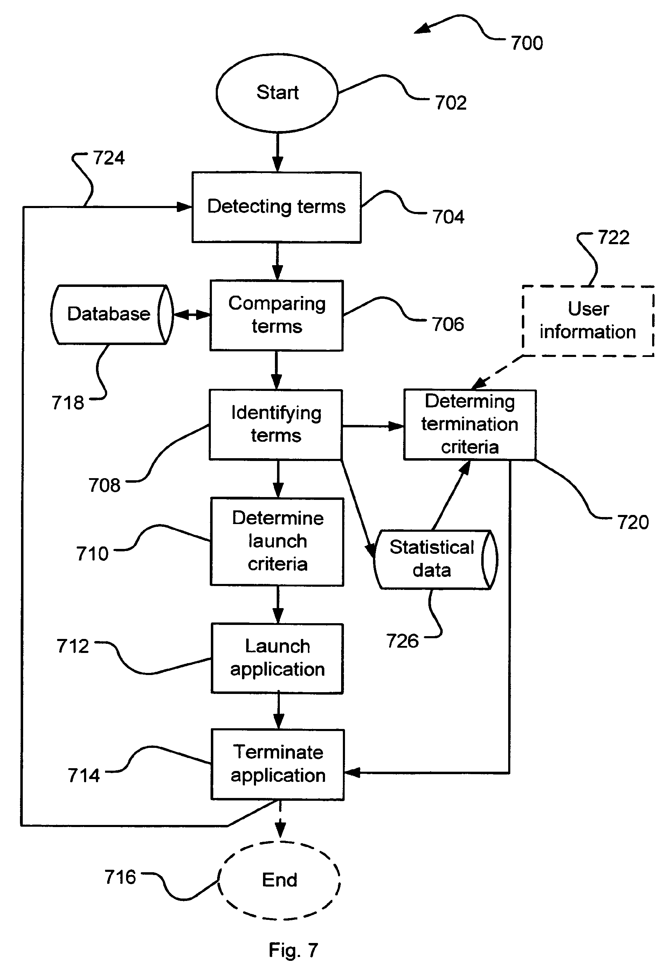

Figure 7 describes another procedure for automatically launching an application 700, according to an embodiment of the invention. The automatic launching procedure 700 starts in the same manner as in previous embodiments by detecting terms 704, and comparing the detected terms 706 to terms stored in a database 718, identifying key terms 708, determining a launch criteria 712, and launching an application 712 based on the launch criteria. In this embodiment a termination criteria 720 is determine on the basis of the identified terms and on statistical data 726 collected on the identified terms 708. As in previous embodiments the statistical data 726 may be in the form of how many times a specific term appear in the communication, or some other statistical data. The termination criteria is then used as a basis for determining if a launched application is going to be terminated 714 or not. The termination criteria may in this way be based on how many times a specific key term appear in relation to other key terms. For example, the key term 'send' has been identified five times during a communication and resulted in the launch of a mail application. When the communication continues the term 'picture' is identified 6 times resulting in the launching of the photo album and the termination of the mail application since it is more likely that the user is going to use the photo album than the mail. Optionally, hence the jagged lines, user information 722 may also be a factor that may be considered in the process of determining a termination criteria. For example, the user has specified that a specific term is not relevant to keep statistical data on when talking to a specific user, or that an a new application should not be launched, terminating the older application until a specific key term has been identified a certain number of times in comparison to other key terms. After the termination of the application, or not, in 714 the analysis of the speech may continuo 724, in the same manner as describes above. Optionally, hence the jagged lines, the user may set the automatic launching procedure to end 716 after a first or a predetermined number of application have been launched.

The following is for clarification of certain functions or steps above. In the above embodiments the database may contain user-inputted key terms, downloaded key terms, factory preset key terms, key terms installed and related to a specific application, key terms depending on current application running, key terms based on current user of the mobile phone, key terms based on the current other party engaged in the communication, etc.

In the above embodiments the user information may be in the form of information manually inputted by the user such as when answering questions prompted to the user, user-preset information such as a downloaded and installed user information or information regarding a specific key term, factory-preset user information, information based on the current user of the mobile phone, information based on the other party participating in the communication, information based on current application running, information based on prior behaviour of the current user or the other party, etc.

In the above embodiments, the statistical data may be in the form of parameters such as how many times a specific term has occurred in a communication during a specific time frame, how many times during a specific time frame a key term has generated a launch/termination of an application, the previous two parameters depending the current user, the two first parameters depending on the other party engaged in the communication, the two first parameters depending on the currently running applications, the two first parameters depending on current operation/manoeuvre of the mobile phone by the user, predictive information regarding key terms statistics of the general population, etc.

The embodiments described above in conjunction with figure 3 to 7 may be combined in any possible way to form a new automatic launch procedure incorporating and/or excluding any features or steps from the different embodiments.

A few examples are presented below to further clarify and illustrate the embodiments described above.

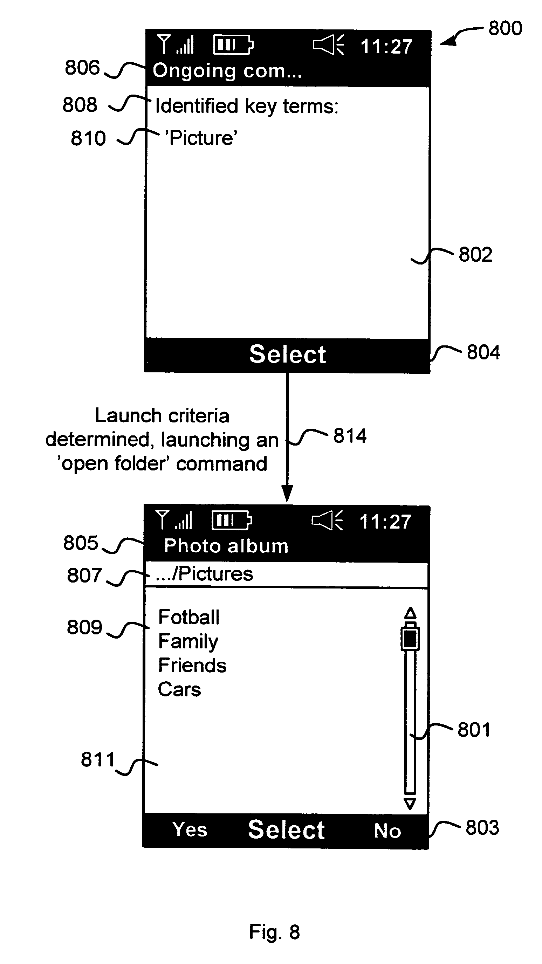

Figure 8 shows an example of a display screen 800 according to the embodiment of the present invention presented in conjunction with figure 3. Figure 8 shows a display view 800 in a mobile communication device during an ongoing communication 806 between two users. As shown in the display view 802 one key term 'Picture' 810 has been identified 808. Since the key term Picture' is related to the pictures in the photo album, a launch criteria for opening the pictures folder in the photo album is automatically generated. The launch criteria is automatically executed 814 and the pictures folder 807 in the photo album 805 is opened (launched) displaying subfolders in the display view 811 with categorized photos 809. When the user, during or after the communication looks on the screen the wanted application, in this case the photo album and the users pictures are already accessed and displayed, thus saving the user cumbersome operation of the mobile communication device and time.

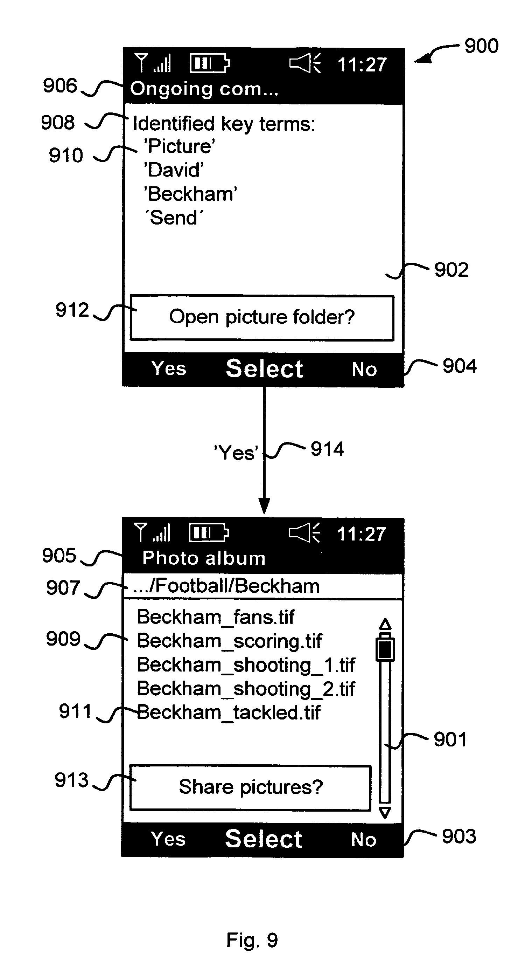

Figure 9 shows an example of a display screen 900 according to the embodiment of the present invention presented in conjunction with figure 4. Figure 9 shows a display view 900 in a mobile communication device during an ongoing communication 906 between two users. As shown in the display view 902 the key terms 'Picture', 'David', 'Beckham', and 'Send' have been detected during the communication between the users. In this example the user has been prompted 912 to give 'User information' via the soft menu 904 on if the use wants to open the picture folder or not, since the user might want to open the mail application instead since the key term 'send' also has been detected. In this example the user answers 'yes' 914 to the question. The user information together with the determined key terms makes up the basis for the determination of a launch criteria. In this case the pictures folder in the photo album will be opened but since other relevant key terms related to football and corresponding to sub folders in the photo album (see fig. 8) have been detected additional subfolders may be opened 907. In our case the opening of subfolder Football and Beckham is added to the user info making up the launch criteria. The launch criteria is automatically executed 914 and the pictures folder 907 in the photo album 905 is opened (launched) displaying picture files of David Beckham 909. When the user, during or after the communication looks on the screen the wanted application, in this case the photo album and the users pictures are already accessed and displayed, thus saving the user cumbersome operation of the mobile communication device and time.

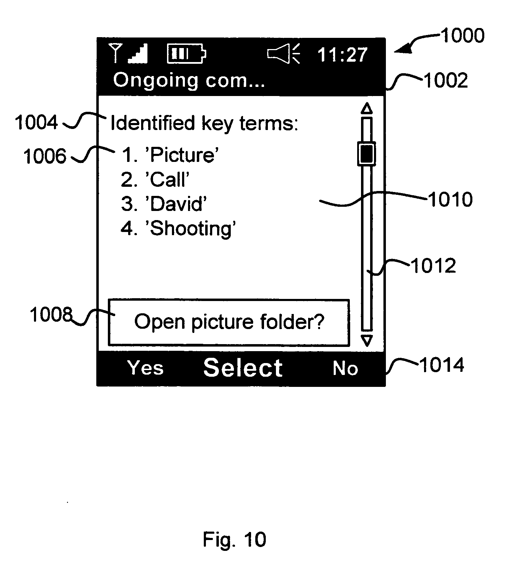

Figure 10 shows an example of a display screen 1010 according to the embodiment of the present invention presented in conjunction with figure 5. Figure 10 shows a display view 1000 in a mobile communication device during an ongoing communication 1006 between two users. As shown in the display view 1010 the key terms 'Picture', 'David', 'Beckham', and 'Shooting' have been detected during the communication between the users.
The identified key terms 1004 are ranked 1006 based on the number of times they have occurred in the communication between the users so far. The key term 'Picture' is the most mentioned key term in the communication, thus ranked number 1, followed by the key term 'Call', thus ranked number 2, and so on. The launch criteria is then based on the statistical ranking of the key terms, the user information, and the key term itself. Consequently the user is prompted 1008 if he or she wants to open the picture folder 1014 since the first ranked key term is 'Picture' which is related to the picture folder.

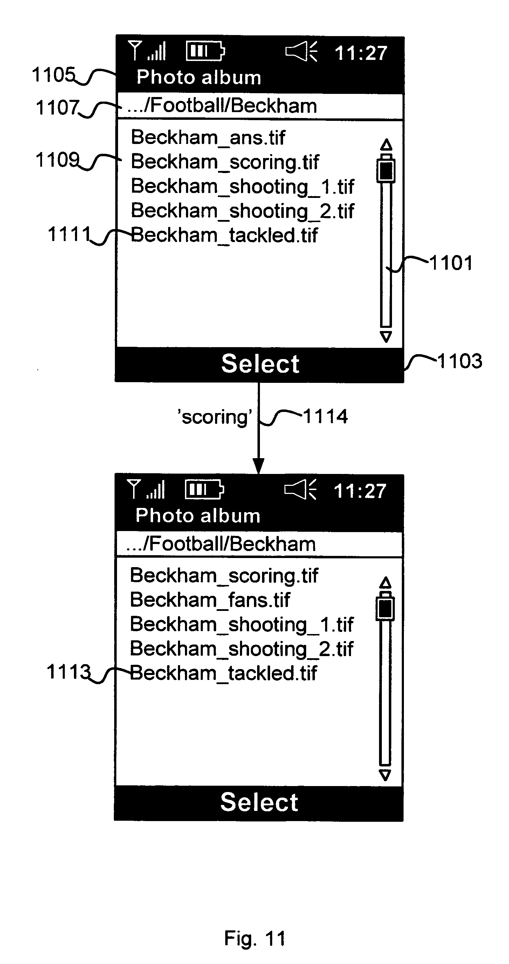

The statistical information may be used continuously, even though one or more applications have already been launched, to further improve the prediction of what the user wants to access. Figure 11 shows an example of a display screen 1100 according to the embodiment of the present invention. Figure 11 shows a display view 1109 in a mobile communication device during an ongoing communication where the automatic launching procedure already have detected some key terms and launched the photo album 1105 and opened the football and Beckham folder 1107. A list 1111 of the user's photographs of Beckham is listed in the display view 1109. The key term 'scoring' is identified from the conversation 1114. The second file displayed in the upper display view 1109 in figure 11 is named 'Beckham_scoring.tif'. When the key term 'scoring' 1114 was detected a new launch criteria was created re-ranking the files in the displayed list, and to place the file containing the word 'scoring' at the top of the list, making it easy to select it for the user. In this way the identification process is constantly active, launching applications and in some cases even terminating already launched applications, to make the best prediction possible of what the user wants to do and access in the near future.

Another example of an embodiment is when two users are communicating face-to-face with each other. One of the users activated his mobile phone which starts monitoring the communication via its microphone. Key terms from the communication between the two users are identified and appropriate applications and or commands are launched. For example, the following conversation is picked up:

Bob initiate his mobile phone and says: 'Hi john'
John: Hi Bob'
Bob: 'Did you see the football match yesterday when Beckham scored two goals?'
John: 'No, unfortunately.'
Bob: 'I took some pictures when Beckham scored, do you like to see them?'
John: 'yes, please!'

In this conversation the mobile phone may for instance pick up and identify the key terms 'Bob', 'John', 'football', 'Beckham', 'scored', 'yesterday', 'no', 'see them', and 'yes'. The key terms may be ranked (statistical treated), related to each user (user information), and related to the spoken words (key terms). All this information is analysed and a launch criteria is created. The launch criteria may be 'access photo album and picture folder from yesterday, and picture folder containing pictures of Beckham, detect and sort the pictures related to scoring, prepare sharing by setting up communication with John as recipient, automatically share relevant pictures or prompt the user to share the relevant pictures'. The user only has to push a share button to share his picture of Beckham scoring a goal. In this way Bob is spared several tedious operations of the mobile phone.

Information sharing may not only be limited to the sharing of picture files. Other type of information may also be shared such as music files, video files, streaming data, links or references to data, contact information, message data, text and document data (e.g..txt, .pdf, .doc, .ppt, .exe, etc.), and metadata.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" "comprising," "includes" and/or "including" when used herein, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms used herein should be interpreted as having a meaning that is consistent with their meaning in the context of this specification and the relevant art and will not be interpreted in an idealized or overly formal sense unless expressly so defined herein.

The foregoing has described the principles, preferred embodiments and modes of operation of the present invention. However, the invention should be regarded as illustrative rather than restrictive, and not as being limited to the particular embodiments discussed above. The different features of the various embodiments of the invention can be combined in other combinations than those explicitly described. It should therefore be appreciated that variations may be made in those embodiments by those skilled in the art without departing from the scope of the present invention as defined by the following claims.

## Claims

1. Method for launching at least one application in a communication device, comprising the steps of; detecting (302), in said communication device, one or more terms during speech communication between at least two parts, wherein at least one of said parts is a person; comparing (304) said terms with stored terms in a database (308); identifying (306) one or more key terms depending on said comparison; determining (310) a launch criteria based on one or more said key terms; launching (314) at least one application, based on said launch criteria, in said communication device; and ending (316) said detection when a predetermined number of applications have been launched during said speech communication, **characterized in that** the step of determining the launch criteria comprises storing statistical data of the occurrences of said identified key terms and is based on the most occurred said identified key term in said stored statistical data .

2. The method according to claim 1, wherein said launch criteria is further based on user information (420).

3. The method according to any of the previous claims, wherein said method further comprise the step of determining (620) a termination criteria based on said identified key terms, and terminating at least one application, based on said termination criteria, in said communication device.

4. The method according to claim 3, wherein said termination criteria is further based on said user information (622).

5. The method according to any of the previous claims, wherein said launch criteria is continuously updated during said speech communication.

6. The method according to any of claims 1 to 4, wherein said launching, based on said launch criteria, is executed continuously during said speech communication.

7. The method according to any of the previous claims 1-6, wherein said launching, based on said launch criteria, is executed during said speech communication.

8. The method according to any of the previous claims 1-6, wherein said launching, based on said launch criteria, is executed after said speech communication is ended.

9. The method according to claim 1, wherein a running application is terminated when a further application is launched.

10. A communication device (100) adapted for launching at least one application in said communication device (100), comprising; detecting means for detecting, in said communication device (100), one or more terms (810) during speech communication (806) between at least two parts wherein at least one of said parts is a person; comparing means for comparing said terms with stored terms in a database (418); identifying means for identifying one or more key terms depending on said comparison; and launching means for launching at least one application (805), based on launch criteria, in said communication device (100); and ending means for ending said detection when a predetermined number of applications have been launched during said speech communication **characterized in that** the communication device further comprises storing means for storing statistical data over the occurrence of said identified key terms during said speech communication and determining means for determining the launch criteria based on the most occurred said identified key term in said storing means.

11. The communication device according to claim 10, further comprise providing means for providing user information.

12. The communication device according to claims 10 to 11, further comprise determining means for determining a termination criteria based on said identified key terms, and termination means for terminating at least one application, based on said termination criteria, in said communication device.

13. The communication device according to claims 10 to 12, further comprise updating means for continuous updating of the launch criteria during said speech communication.

14. The communication device according to claim 13, further comprise execution means for continuous executing of said launching means, based on said launch criteria, during said speech communication.

## Patentansprüche

1. Verfahren zum Starten wenigstens einer Anwendung in einer Kommunikationsvorrichtung, umfassend die Schritte; ein Erfassen (302) in der Kommunikationsvorrichtung, eines oder mehr Terme während einer Sprachkommunikation zwischen wenigstens zwei Teilen, wobei wenigstens einer der Teile eine Person ist; ein Vergleichen (304) der Terme mit gespeicherten Termen in einer Datenbank (308); ein Identifizieren (306) eines oder mehr Schlüsselterme in Abhängigkeit von dem Vergleich; ein Bestimmen (310) eines Startkriteriums basierend auf einem oder mehr der Schlüsselterme; ein Starten (314) von wenigstens einer Anwendung, basierend auf dem Startkriterium, in der Kommunikationsvorrichtung; und ein Beenden (316) der Erfassung, wenn eine vorbestimmte Zahl an Anwendungen während der Sprachkommunikation gestartet wurde, **dadurch gekennzeichnet, dass** der Schritt des Bestimmens des Startkriteriums ein Speichern von statistischen Daten der Vorkommnisse der identifizierten Schlüsselterme umfasst und auf dem am meisten vorgekommenen identifizierten Schlüsselterm in den gespeicherten statistischen Daten basiert ist.

2. Verfahren nach Anspruch 1, wobei das Startkriterium ferner auf einer Benutzerinformation (420) basiert.

3. Verfahren nach einem der vorangehenden Ansprüche, wobei das Verfahren ferner den Schritt eines Bestimmens (620) eines Terminierungskriteriums umfasst, basierend auf den identifizierten Schlüsseltermen und des Terminierens von wenigstens einer Anwendung basierend auf dem Terminierungskriterium, in der Kommunikationsvorrichtung.

4. Verfahren nach Anspruch 3, wobei das
Terminierungskriterium ferner auf der Benutzerinformation (622) basiert.

5. Verfahren nach einem der vorangehenden Ansprüche, wobei das Startkriterium kontinuierlich während der Sprachkommunikation aktualisiert wird.

6. Verfahren nach einem der Ansprüche 1 bis 4, wobei das Starten, basierend auf dem Startkriterium, kontinuierlich während der Sprachkommunikation ausgeführt wird.

7. Verfahren nach einem der vorangehenden Ansprüche 1 bis 6, wobei das Starten, basierend auf dem Startkriterium, während der Sprachkommunikation ausgeführt wird.

8. Verfahren nach einem der vorangehenden Ansprüche 1 bis 6, wobei das Starten, basierend auf dem Startkriterium, ausgeführt wird, nachdem die Sprachkommunikation beendet ist.

9. Verfahren nach Anspruch 1, wobei eine laufende Anwendung terminiert wird, wenn eine weitere Anwendung gestartet wird.

10. Kommunikationsvorrichtung (100), die angepasst ist, wenigstens eine Anwendung in der Kommunikationsvorrichtung (100) zu starten, umfassend; Erfassungsmittel zum Erfassen, in der Kommunikationsvorrichtung (100), eines oder mehr Terme (810) während einer Sprachkommunikation (806) zwischen wenigstens zwei Teilen, wobei wenigstens einer der Teile eine Person ist; Vergleichsmittel zum Vergleichen der Terme mit gespeicherten Termen in einer Datenbank (418); Identifizierungsmittel zum Identifizieren eines oder mehr Schlüsselterme in Abhängigkeit von dem Vergleich;
und Startmittel zum Starten von wenigstens einer Anwendung (805), basierend auf einem Startkriterium, in der Kommunikationsvorrichtung (100); und Beendigungsmittel zum Beenden der Erfassung, wenn eine vorbestimmte Zahl von Anwendungen während der Sprachkommunikation gestartet wurde, **dadurch gekennzeichnet, dass** die Kommunikationsvorrichtung ferner Speichermittel umfasst, zum Speichern von statistischen Daten über das Auftreten von den identifizierten Schlüsseltermen während der Sprachkommunikation und Bestimmungsmittel zum Bestimmen des Startkriteriums, basierend auf dem am häufigsten aufgetretenen identifizierten Schlüsselterm in dem Speichermittel.

11. Kommunikationsvorrichtung nach Anspruch 10, ferner umfassend Bereitstellungsmittel zum Bereitstellen von Benutzerinformation.

12. Kommunikationsvorrichtung nach Ansprüchen 10 bis 11, ferner umfassend Bestimmungsmittel zum Bestimmen eines Terminierungskriteriums basierend auf den identifizierten Schlüsseltermen, und Terminierungsmittel zum Terminieren von wenigstens einer Anwendung, basierend auf dem Terminierungskriterium, in der Kommunikationsvorrichtung.

13. Kommunikationsvorrichtung nach Ansprüchen 10 bis 12, ferner umfassend Aktualisierungsmittel zum kontinuierlichen Aktualisieren des Startkriteriums während der Sprachkommunikation.

14. Kommunikationsvorrichtung nach Anspruch 13, ferner umfassend Ausführungsmittel zum kontinuierlichen Ausführen der Startmittel, basierend auf dem Startkriterium, während der Sprachkommunikation.

## Revendications

1. Procédé destiné à lancer au moins une application dans un dispositif de communication, comprenant les étapes qui consistent : à détecter (302), dans ledit dispositif de communication, un ou plusieurs termes lors d'une communication vocale entre au moins deux parties, dans lequel au moins l'une desdites parties est une personne ; à comparer (304) lesdits termes aux termes stockés dans une base de données (308) ; à identifier (306) un ou plusieurs termes clés en fonction de ladite comparaison ; à déterminer (310) des critères de lancement sur la base d'un ou une pluralité desdits termes clés ; à lancer (314) au moins une application, sur la base desdits critères de lancement, dans ledit dispositif de communication ; et à terminer (316) ladite détection lorsqu'un nombre prédéterminé d'applications ont été lancées pendant ladite communication vocale, **caractérisé en ce que** l'étape de détermination des critères de lancement comprend le stockage des données statistiques des occurrences desdits termes clés identifiés et est basée sur ledit terme clé identifié le plus occurrent dans lesdites données statistiques stockées.

2. Procédé selon la revendication 1, dans lequel lesdits critères de lancement sont en outre basés sur des informations d'utilisateur (420).

3. Procédé selon l'une des revendications précédentes, dans lequel ledit procédé comprend en outre l'étape qui consiste à déterminer (620) des critères de terminaison sur la base desdits termes clés identifiés, et à terminer au moins une application, sur la base desdits critères de terminaison, dans ledit dispositif de communication.

4. Procédé selon la revendication 3, dans lequel lesdits critères de terminaison sont en outre basés sur lesdites informations d'utilisateur (622).

5. Procédé selon l'une des revendications précédentes, dans lequel lesdits critères de lancement sont continuellement mis à jour pendant ladite communication vocale.

6. Procédé selon l'une des revendications 1 à 4, dans lequel ledit lancement, sur la base desdits critères de lancement, est exécuté continuellement pendant ladite communication vocale.

7. Procédé selon l'une des revendications 1 à 6, dans lequel ledit lancement, sur la base desdits critères de lancement, est exécuté pendant ladite communication vocale.

8. Procédé selon l'une des revendications 1 à 6, dans lequel ledit lancement, sur la base desdits critères de lancement, est exécuté après la terminaison de ladite communication vocale.

9. Procédé selon la revendication 1, dans lequel une application en cours d'exécution est terminée lorsqu'une autre application est lancée.

10. Dispositif de communication (100) adapté pour lancer au moins une application dans ledit dispositif de communication (100), comprenant : un moyen de détection pour détecter, dans ledit dispositif de communication (100), un ou plusieurs termes (810) pendant la communication vocale (806) entre au moins deux parties où au moins l'une desdites parties est une personne ; un moyen de comparaison pour comparer lesdits termes aux termes stockés dans une base de données (418) ; un moyen d'identification pour identifier un ou plusieurs termes clés en fonction de ladite comparaison ; et un moyen de lancement pour lancer au moins une application (805), sur la base des critères de lancement, dans ledit dispositif de communication (100) ; et un moyen de terminaison pour terminer ladite détection lorsqu'un nombre prédéterminé d'applications ont été lancées pendant ladite communication vocale, **caractérisé en ce que** le dispositif de communication comprend en outre un moyen de stockage pour stocker des données statistiques sur l'occurrence desdits termes clés identifiés pendant ladite communication vocale et un moyen de détermination pour déterminer les critères de lancement sur la base dudit terme clé identifié le plus occurrent dans ledit moyen de stockage.

11. Dispositif de communication selon la revendication 10, comprenant en outre un moyen fournisseur d'informations pour fournir des informations d'utilisateur.

12. Dispositif de communication selon les revendications 10 à 11, comprenant en outre un moyen de détermination pour déterminer des critères de terminaison sur la base desdits termes clés identifiés, et un moyen de terminaison pour terminer au moins une application, sur la base desdits critères de terminaison, dans ledit dispositif de communication.

13. Dispositif de communication selon les revendications 10 à 12, comprenant en outre un moyen de mise à jour pour mettre à jour de manière continue des critères de lancement pendant ladite communication vocale.

14. Dispositif de communication selon la revendication 13, comprenant en outre un moyen d'exécution pour exécuter de manière continue ledit moyen de lancement, sur la base desdits critères de lancement, pendant ladite communication vocale.
